# FASCICULE DE BREVET EUROPEEN

(11) **EP 1 254 038 B1**
(45) Date de publication et mention de la délivrance du brevet: **19.04.2006**
(21) Numéro de dépôt: 01907744.5
(22) Date de dépôt: 09.02.2001
(51) Int. Cl.: B60R 13/02

(54) **AGENCEMENT INTERIEUR POUR UN HABITACLE D'UN VEHICULE AUTOMOBILE**
INNENAUSSTATTUNGSTEIL FÜR DEN FAHRGASTRAUM EINES FAHRZEUGS
INTERNAL ARRANGEMENT FOR A MOTOR VEHICLE PASSENGER COMPARTMENT

(30) Priorité: 11.02.2000 FR 0001705
(43) Date de publication de la demande: 06.11.2002
(73) Titulaire: Renault s.a.s., 92100 Boulogne Billancourt (FR)
(72) Inventeur: PONCEAU, Philippe, F-78610 Le Perray en Yvelines (FR)
(86) Numéro de dépôt international: PCT/FR2001/000378
(87) Numéro de publication internationale: WO 2001/058723

(56) Documents cités:
- EP-A- 0 776 792
- GB-A- 2 307 454
- US-A- 4 958 883
- PATENT ABSTRACTS OF JAPAN vol. 1996, no. 5, 31 mai 1996 (1996-05-31) & JP 08 011643 A (DAIHATSU MOTOR), 16 janvier 1996 (1996-01-16) cité dans la demande

## Description

L'invention concerne un agencement intérieur pour un habitacle d'un véhicule automobile.

L'invention concerne plus particulièrement un agencement intérieur pour un habitacle d'un véhicule automobile, du type dans lequel l'habitacle est délimité par au moins un plancher et un pavillon qui sont reliés, au moins d'un côté du véhicule, par un montant tubulaire creux, sensiblement vertical, porteur de moyens d'ouvrants latéraux du véhicule, du type dans lequel au moins un élément d'habillage est destiné à être fixé sur une face du montant tubulaire tournée vers l'intérieur de l'habitacle.

On connaît de nombreux exemples d'agencement intérieurs de ce type.

Il s'agit pour la plupart d'agencements intérieurs comportant un ou deux éléments d'habillage en matériau plastique qui sont fixés sur le montant tubulaire creux.

En particulier, dans la plupart des cas, ces agencements comportent un élément d'habillage supérieur, qui habille la partie supérieure du montant et qui est traversé par une vis de fixation d'une boucle de renvoi d'une sangle d'une ceinture de sécurité à enrouleur du véhicule.

Ces agencements comportent aussi un élément d'habillage inférieur, qui recouvre la partie inférieure du montant. L'élément d'habillage intérieur peut notamment masquer l'enrouleur de la ceinture de sécurité, qui est reçu dans un évidement du montant creux. Le brin de la ceinture de sécurité émerge de l'élément d'habillage intérieur du véhicule au niveau de la jonction entre les éléments supérieur et inférieur d'habillage intérieur du véhicule.

L'inconvénient majeur de tels habillages éléments d'habillage intérieurs est leur mode de fixation au montant.

En effet, de tels éléments d'habillage intérieurs sont généralement fixés au montant par l'intermédiaire d'agrafes mâles ou femelles qui sont reçues dans des parties de réception complémentaires femelles ou mâles liées au montant. Lors de l'assemblage du véhicule, la mise en position de l'élément d'habillage intérieur exige de longues manipulations de la part de l'opérateur en charge de l'assemblage.

Pour remédier à cet inconvénient, on a proposé, comme décrit dans le document JP-A-8/11643, un élément inférieur d'habillage qui présente sensiblement la forme d'un "U" dont les extrémités des branches sont recourbées vers l'intérieur. Une extrémité de la première branche du U porte une pince destinée à recevoir transversalement une aile verticale du montant, et l'autre extrémité de la deuxième branche du U est recourbée perpendiculairement par rapport à sa direction générale de façon à s'emboîter lors du montage derrière l'autre aile transversale du montant. Lors du montage, l'opérateur en charge du montage assemble la première branche puis la deuxième branche en déformant élastiquement l'élément inférieur d'habillage.

L'inconvénient d'un tel élément inférieur d'habillage réside dans la nécessité de mettre correctement en position la première branche sur toute la hauteur en regard de l'aile du montant.

Par ailleurs, un tel élément inférieur d'habillage présente généralement une mobilité réduite par rapport au montant sur lequel il est fixé, de sorte qu'il risque de s'opposer au déploiement d'un coussin gonflable de sécurité du véhicule contenu dans un dossier du siège voisin.

Enfin, un tel élément inférieur d'habillage ne peut être monté par l'intermédiaire de moyens robotisés d'assemblage.

Pour remédier à ces inconvénients, l'invention propose un élément d'habillage intérieur élastiquement déformable qui peut être monté par un simple emboîtement selon une direction unique.

Dans ce but, l'invention propose un agencement intérieur de l'habitacle d'un véhicule automobile du type précédemment décrit, où l'au moins un élément d'habillage est conformé en une gouttière présentant une section en forme de U dont les branches principales sont élastiques pour permettre le montage par emboîtement élastique de l'élément selon une direction perpendiculaire à la face intérieure du montant tubulaire, caractérisé en ce que le montant tubulaire comporte deux ailes verticales sur chacune desquelles est enfilée une pince d'un joint dont une face verticale perpendiculaire à la face intérieure du montant forme une portée pour la branche principale correspondante du U de l'élément.

Selon d'autres caractéristiques de l'invention :
- chaque joint comporte une branche élastique recourbée qui s'étend sensiblement parallèlement à chaque aile verticale du montant vers l'intérieur de l'habitacle pour former une partie d'introduction des branches de l'élément et une butée pour la branche intermédiaire du U de l'élément,
- les extrémités des branches principales de l'élément sont conformées en crochet pour retenir l'élément sur des parties de section tubulaire double des joints,
- les branches principales du U de l'élément sont d'une longueur déterminée permettant de laisser subsister un jeu transversal entre la branche intermédiaire du U de l'élément et la face intérieure du montant, notamment pour le montage d'un système de ceinture de sécurité fixé sur la face intérieure du montant,
- les branches principales du U de l'élément sont d'une raideur déterminée pour permettre la compression de l'élément par déformation élastique lors du gonflage d'un coussin gonflable de sécurité du véhicule porté par un siège voisin, et
- l'élément s'étend seulement sur une partie inférieure de la hauteur du montant tubulaire et comporte un bord horizontal supérieur destiné à s'ajuster avec un élément supérieur d'habillage du montant.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un agencement intérieur selon l'invention ;
- la figure 2 est une vue en coupe transversale d'un élément d'habillage intérieur de l'agencement de la figure 1 en cours de montage ;
- la figure 3 est une vue en coupe transversale d'un élément d'habillage intérieur de l'agencement de la figure 1 représenté monté ;
- la figure 4 est une vue en coupe longitudinale de l'élément d'habillage intérieur de la figure 2.

Dans la description qui va suivre, des chiffres de référence identiques désignent des pièces identiques ou ayant des fonctions similaires.

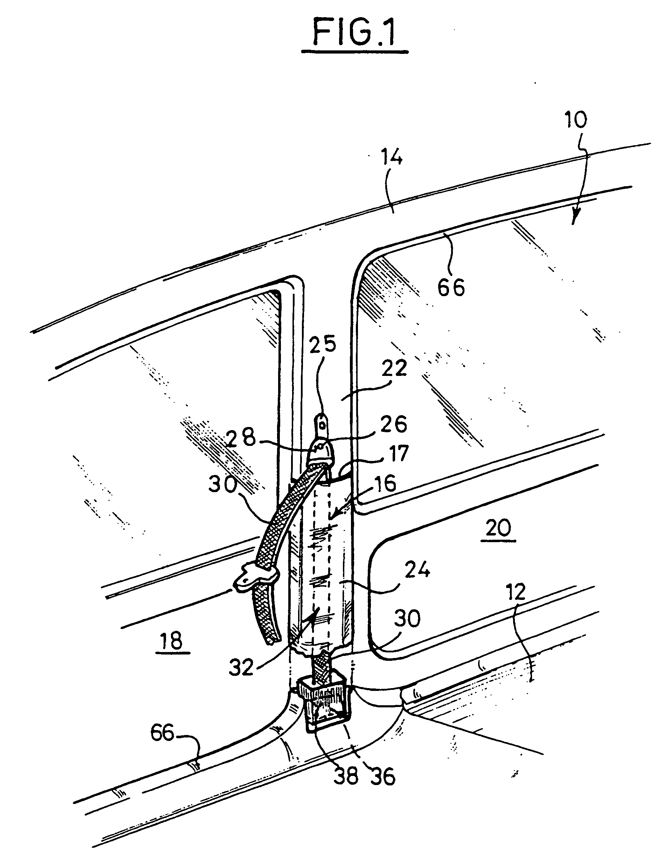

On a représenté à la figure 1 l'ensemble d'un agencement intérieur de l'habitacle 10 d'un véhicule automobile.

De manière connue, l'habitacle 10 est délimité par au moins un plancher 12 et un pavillon 14 qui sont reliés, au moins d'un côté du véhicule, par un montant 16 tubulaire creux sensiblement vertical porteur de moyens d'ouvrants latéraux du véhicule.

En particulier, le montant 16 peut notamment recevoir un pêne (non représenté) d'une porte avant 18 et des charnières (non représentées) d'articulation d'une porte arrière 20.

De manière connue, au moins un élément d'habillage est destiné à être fixé sur une face du montant 16 tubulaire tournée vers l'intérieur de l'habitacle 10.

En particulier, l'agencement représenté à la figure 1 comporte un élément 22 d'habillage supérieur, qui habille la partie supérieure du montant 16, et un élément 24 d'habillage inférieur, qui habille la partie inférieure du montant 16.

L'élément 22 d'habillage supérieur est traversé par une vis 26 de fixation d'une boucle 28 de renvoi d'une ceinture 32 de sécurité à enrouleur du véhicule. La boucle 28 est traversée par une sangle 30 de la ceinture 32 du véhicule.

L'élément 24 d'habillage inférieur peut par exemple masquer l'enrouleur 36 de la ceinture 32 de sécurité, qui est reçu dans un évidement 38 du montant creux 16. Le brin 30 de la ceinture 32 de sécurité émerge à la jonction entre les éléments 22 supérieur et 24 inférieur d'habillage intérieur du véhicule.

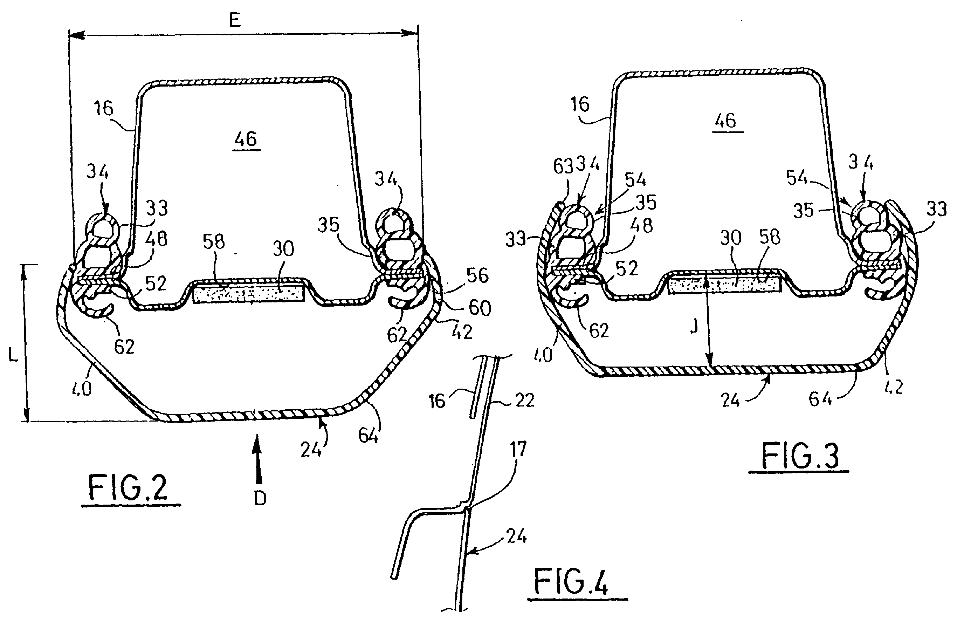

Conformément à l'invention, et comme l'illustre plus particulièrement la figure 2, l'élément 24 d'habillage inférieur est conformé en une gouttière présentant une section en forme de U dont les branches principales 40 et 42 sont élastiques pour permettre le montage par emboîtement élastique de l'élément 24 selon une direction D perpendiculaire à la face intérieure 44 du montant tubulaire 16.

Il sera compris que l'invention peut trouver à s'appliquer à des éléments d'habillages autres que l'élément d'habillage 24 d'habillage inférieur. Dans l'exemple de réalisation de l'invention qui est représenté sur les figures, la partie supérieure du montant tubulaire 16 peut aussi comporter un élément 22 d'habillage supérieur présentant des caractéristiques analogues, pourvu qu'il soit percé d'une lumière 25 destinée à permettre le passage d'un système 26 de réglage en hauteur de la boucle de renvoi de la ceinture 32.

D'une façon analogue, l'invention trouve plus généralement à s'appliquer à tout élément d'habillage intérieur susceptible de s'emboîter sur un quelconque élément tubulaire de structure de caisse.

Dans le mode de réalisation préféré de l'invention représenté aux figures 1 et 4, l'élément inférieur 24 s'étend seulement sur une partie inférieure de la hauteur du montant tubulaire 16 et comporte un bord 17 horizontal supérieur destiné à s'ajuster avec l'élément supérieur 22 d'habillage du montant.

Comme l'illustre la figure 2, le montant tubulaire 16 est sensiblement vertical et présente, à titre d'exemple, une partie 46 centrale de section tubulaire sensiblement rectangulaire à partir de laquelle s'étendent, verticalement et dans un plan parallèle à la direction longitudinale générale du véhicule, deux ailes 48 et 50 agencées de part et d'autre de la partie 46 centrale.

Sur chacune de ces ailes 48 et 50 est enfilée une pince 52 d'un joint 54 dont une face verticale 56 est perpendiculaire à la face intérieure 58 du montant 16.

Les branches 40 et 42 de l'élément inférieur présentent en position démontée (non représenté) un écartement déterminé. Au montage, comme l'illustre la figure 2, l'élément 24 est poussé suivant la direction D de façon que ses branches 40 et 42 se déforment élastiquement et que des faces intérieures 58 des extrémités 60 des branches 40 et 42 soient reçues à force contre les faces 56 des joints 54 avec un écartement E supérieur à l'écartement initial.

Chaque face verticale 56 du joint 54 forme alors une portée pour la branche 40. 42 correspondante du U de l'élément 24 qui est retenu contre le joint 54 du simple fait de sa déformation élastique.

Avantageusement, dans le mode de réalisation préféré de l'invention, chaque joint 54 comporte une branche 62 élastique recourbée qui s'étend sensiblement parallèlement à chaque aile verticale 48, 50 vers l'intérieur de l'habitacle pour former une partie d'introduction des branches 40, 42 de l'élément 24 et une butée pour la branche intermédiaire 64 du U de l'élément 24.

En effet, les branches recourbées 62 des joints 54 rejoignent leurs faces 54. De ce fait, lorsque l'élément 24 est amené suivant la direction D contre les joints 54, comme illustré à la figure 2, ses branches 40, 42 rencontrent les branches 62 recourbées, qui forcent les bras 40, 42 à s'écarter en même temps qu'elles glissent vers les faces verticales 56. En poursuivant le mouvement suivant la direction D, la branche intermédiaire 64 de l'élément 24 rencontre à son tour la branche 62 élastique recourbée du joint 54, qui forme ainsi une butée à l'encontre de la progression de l'élément 24, comme représenté à la figure 3.

De plus, comme l'illustre la figure 3, les extrémités libres des branches principales 40 et 42 de l'élément sont conformées en crochets 63 pour retenir l'élément 24 sur les joints 54.

A cet effet, les joints 54 comportent des parties 34 de section tubulaire double, qui sont agencées du côté opposé aux branches recourbées 62 par rapport aux ailes 48, 50 verticales du montant 16. Chaque partie 34 est formée de la réunion de deux tubes simples 33 et 35 de façon à présenter sensiblement en section la forme d'un "8". Le tube 33 rejoint la face verticale 56, et chaque tube 35 est accolé à chaque tube 33. Les tubes sont venus de matière avec le joint 54, de sorte qu'ils sont susceptibles de se déformer élastiquement sous l'action des crochets 63 pour retenir l'élément 24, comme illustré à la figure 3.

Avantageusement, les branches principales 40 et 42 du U de l'élément 24 sont d'une longueur L déterminée qui permet, une fois l'élément 24 monté, de laisser subsister un jeu J transversal entre la branche 64 intermédiaire du U de l'élément 24 et la face intérieure 58 du montant 16, notamment pour le montage du système de ceinture 32 de sécurité à enrouleur précédemment décrit en référence à la figure 1.

Avantageusement, ce jeu J est susceptible d'être réduit lors du déploiement d'un coussin gonflable de sécurité porté par un siège du véhicule voisin du montant. De la sorte, l'élément 24 ne s'oppose pas au fonctionnement dudit coussin gonflable de sécurité et peut se comprimer sous l'action de celui-ci.

Il sera compris que la raideur transversale des branches 40 et 42 principales du U de l'élément 24 est déterminante tant pour le montage de l'élément 24, que pour sa compression par déformation élastique lors du fonctionnement éventuel du coussin gonflable de sécurité porté par le siège voisin du montant.

L'élément 24 peut être monté aisément. Lors d'une première étape du montage, les joints 54 sont pincés sur les ailes 48, 50 du montant 16, puis, dans une deuxième étape du montage, l'élément 24 est emboîté sur les joints 54.

L'invention permet ainsi d'obtenir un agencement intérieur de l'habitacle 10 du véhicule facile à monter, et donc qui permet de diminuer le coût de montage global du véhicule. L'opération de montage peut aussi être automatisée, ce qui permet avantageusement de diminuer encore le coût global d'assemblage du véhicule.

## Revendications

1. Agencement intérieur pour un habitacle (10) d'un véhicule automobile, du type dans lequel l'habitacle (10) est délimité par au moins un plancher (12) et un pavillon (14) qui sont reliés, au moins d'un côté du véhicule, par un montant (16) tubulaire creux, sensiblement vertical, porteur de moyens d'ouvrants (18, 20) latéraux du véhicule, du type dans lequel au moins un élément (22, 24) d'habillage est destiné à être fixé sur une face (58) du montant tubulaire tournée vers l'intérieur de l'habitacle (10), du type dans lequel l'au moins un élément (24) d'habillage est conformé en une gouttière présentant une section en forme de U dont les branches (40, 42) principales sont élastiques pour permettre la fixation par emboîtement élastique de l'élément (24) selon une direction (D) perpendiculaire à la face intérieure (58) du montant (16) tubulaire,
**caractérisé en ce que** le montant (16) tubulaire comporte deux ailes (48, 50) verticales sur chacune desquelles est enfilée une pince (52) d'un joint (54) dont une face (56) verticale perpendiculaire à la face (58) intérieure du montant (24) forme une portée pour la branche principale (48, 50) correspondante du U de l'élément (16).

2. Agencement intérieur selon la revendication précédente, **caractérisé en ce que** chaque joint (54) comporte une branche (62) élastique recourbée qui s'étend sensiblement parallèlement à chaque aile verticale du montant vers l'intérieur de l'habitacle pour former un partie d'introduction des branches (40, 42) de l'élément (24) et une butée pour la branche (64) intermédiaire du U de l'élément (24).

3. Agencement intérieur selon l'une quelconque des revendications précédentes, **caractérisé en ce que** les extrémités des branches (40, 42) principales de l'élément sont conformées en crochet (63) pour retenir l'élément (24) sur des parties (34) de section tubulaire double des joints (54).

4. Agencement intérieur selon l'une des revendications 2 ou 3, **caractérisé en ce que** les branches (40, 42) principales du U de l'élément sont d'une longueur (L) déterminée permettant de laisser subsister un jeu (J) transversal entre la branche (64) intermédiaire du U de l'élément et la face (58) intérieure du montant (16), notamment pour le montage d'un système de ceinture (32) de sécurité à enrouleur fixé sur la face intérieure (58) du montant.

5. Agencement intérieur selon la revendication précédente, **caractérisé en ce que** les branches (40, 42) principales du U de l'élément (24) sont d'une raideur déterminée pour permettre la compression de l'élément (24) par déformation élastique lors du gonflage d'un coussin gonflable de sécurité du véhicule porté par un siège voisin.

6. Agencement intérieur selon l'une quelconque des revendications précédentes, **caractérisé en ce que** l'élément (24) s'étend seulement sur une partie inférieure de la hauteur du montant (16) tubulaire et comporte un bord (17) horizontal supérieur destiné à s'ajuster avec un élément supérieur (22) d'habillage du montant (16).

## Claims

1. An internal arrangement for a passenger space (10) of an automobile vehicle, of the type in which the passenger space (10) is bounded by at least a floor (12) and a roof (14) which are connected, on one side of the vehicle at least, by a substantially vertical hollow tubular upright (16) bearing lateral opening means (18, 20) of the vehicle, of the type in which at least one covering member (22, 24) is adapted to be secured to a surface (58) of the tubular upright facing the interior of the passenger space (10), of the type in which at least one covering member (24) is shaped as a gutter having a U-shaped cross-section whose main arms (40, 42) are resilient in order to enable the fastening by elastic fitting of the member (24) in a direction (D) perpendicular to the inner surface (58) of the tubular upright (16), **characterised in that** the tubular upright (16) comprises two vertical flanges (48, 50) on each of which there is threaded a gripper (52) of a joint (54), a vertical surface (56) of which, perpendicular to the inner surface (58) of the upright (24), forms a bearing for the corresponding main arm (48; 50) of the U-shaped member (16).

2. An internal arrangement as claimed in the preceding claim, **characterised in that** each joint (54), comprises a curved resilient arm (62) which extends substantially parallel to each vertical flange of the upright towards the interior of the passenger space in order to form an introductory portion for the arms (40, 42) of the member (24) and an abutment for the intermediate arm (64) of the U-shaped member (24).

3. An interuad arrangement as claimed in any one of the preceding claims, **characterised in that** the ends of the main arms (40, 42) of the member are shaped as hooks (63) in order to retain the member (24) on the portions (34) of double tubular section of the joints (54).

4. An internal arrangement as claimed in one of claims 2 or 3, **characterised in that** the main arms (40, 42) of the U-shaped member are of a predetermined length (L) enabling the continuation of a transverse play (J) between the intermediate arm (64) of the U-shaped member and the inner surface (58) of the upright (16), especially for the assembly of a safety belt system (32) on a winder secured to the inner surface (58) of the upright.

5. An internal arrangement as claimed in the preceding claim, **characterised in that** the main arms (40, 42) of the U-shaped member (24) are of a predetermined rigidity in order to enable the compression of the member (24) by resilient deformation during the inflation of a safety airbag of the vehicle borne by a neighbouring seat.

6. An internal arrangement as claimed in any one of the preceding claims, **characterised in that** the member (24) extends only over a lower portion of the height of the tubular upright (16) and comprises an upper horizontal edge (17) adapted to be fitted with an upper covering member (22) of the upright (16).

## Patentansprüche

1. Innere Einrichtung für eine Fahrgastzelle (10) eines Kraftfahrzeugs von der Art, bei welchem die Fahrgastzelle (10) durch mindestens einen Boden (12) und ein Dach (14) begrenzt wird, welche mindestens auf einer Seite des Fahrzeugs über eine röhrenförmige, hohle, im Wesentlichen vertikale Säule (16) verbunden sind, die seitliche Öffnungsmittel (18, 20) des Fahrzeugs trägt, von der Art, bei welcher mindestens ein Verkleidungselement (22, 24) dafür bestimmt ist, an einer Seite (58) der röhrenförmigen Säule, die in Richtung zum Inneren der Fahrgastzelle (10) gerichtet ist, befestigt zu werden, von der Art, bei welcher mindestens ein Verkleidungsciement (24) in Form einer Rinne ausgestaltet ist, die einen U-förmigen Querschnitt aufweist, dessen Hauptäste (40, 42) elastisch sind, um die Befestigung des Elements (24) über ein elastisches Aufstecken gemäß einer Richtung (D) senkrecht zu der inneren Seite (58) der röhrenförmigen Säule (16) zu erlauben,
**dadurch gekennzeichnet, dass** die röhrenförmige Säule (16) zwei vertikale Flügel (48, 50) aufweist, auf jeden von welchen ein Klemmabschnitt (52) einer Dichtung (54) aufgezogen ist, von der eine vertikale, zu der inneren Seite (58) der Säule (24) senkrechte Fläche (56) eine Auflagefläche für den entsprechenden Hauptast (48, 50) des U des Elements (16) bildet.

2. Innere Einrichtung nach dem vorangegangenen Anspruch, **dadurch gekennzeichnet, dass** jede Dichtung (54) einen elastischen, gekrümmten Ast (62) aufweist, der sich im Wesentlichen parallel zu jedem vertikalen Flügel der Säule in Richtung zum Inneren der Fahrgastzelle erstreckt, um ein Einfuhrungsteit für die Äste (40, 42) des Elements (24) und einen Anschlag für den Zwischenast (64) des U des Elements (24) zu bilden.

3. Innere Einrichtung nach irgendeinem der vorangegangenen Ansprüche, **dadurch gekennzeichnet, dass** die Enden der Hauptäste (40, 42) des Elements als Haken (63) ausgebildet sind zum Halten des Elements (24) auf Teilen (34) von doppelrohrformigem Querschnitt der Dichtungen (54).

4. Innere Einrichtung nach einem der Ansprüche 2 oder 3, **dadurch gekennzeichnet, dass** die Hauptäste (40, 42) des U des Elements von einer vorherbestimmten Länge (L) sind, welche es erlaubt, ein transversales Spiel (J) zwischen dem Zwischenast (64) des U des Elements und der inneren Seite (58) der Säule (16) bestehen zu lassen, insbesondere für die Montage eines aufzurollenden Sicherheitsgurtsystems (32), das an der inneren Seite (58) der Säule befestigt ist.

5. Innere Einrichtung nach dem vorangegangen Anspruch, **dadurch gekennzeichnet, dass** die Hauptäste (40, 42) des U des Elements (24) von einer vorherbestimmten Steifigkeit sind, um die Komprimierung des Elements (24) durch elastische Verformung beim Aufblasen eines Sicherheits-Airbags des Fahrzeugs zu erlauben, der durch einen benachbarten Sitz getragen wird.

6. Innere Einrichtung nach irgendeinem der vorangegangenen Ansprüche, **dadurch gekennzeichnet, dass** das Element (24) sich lediglich über einen unteren Teil der Höhe der röhrenförmigen Säule (16) erstreckt und einen horizontalen oberen Rand (17) aufweist, der dafür bestimmt ist, sich an ein oberes Verkleidungselement (22) der Säule (16) anzupassen.
